# FASCICULE DE BREVET EUROPEEN

(11) **EP 0 519 826 B1**
(45) Date de publication et mention de la délivrance du brevet: **29.11.1995**
(21) Numéro de dépôt: 92401700.7
(22) Date de dépôt: 18.06.1992
(51) Int. Cl.: B60S 1/38

(54) **Essuie-glace pour véhicule automobile équipé d'un déflecteur aérodynamique**
Scheibenwischer für ein Kraftfahrzeug, versehen mit einem aerodynamischen Windabweiser
Windscreen wiper for automotive vehicle equipped with an aerodynamic spoiler

(30) Priorité: 20.06.1991 FR 9107566
(43) Date de publication de la demande: 23.12.1992
(73) Titulaire: PAUL JOURNEE S.A., F-92707 Colombes Cédex (FR)
(72) Inventeur: Journee, Maurice, F-60240 Chaumont-en-Vexin (FR); Jehannet, Jean-Pierre, F-27200 Vernon (FR)
(74) Mandataire: Lemaire, Marc

(56) Documents cités:
- EP-A- 0 337 042
- EP-A- 0 398 376
- DE-A- 3 637 348
- FR-A- 2 621 288
- GB-A- 2 191 936
- GB-A- 2 226 234

## Description

La présente invention concerne un perfectionnement pour un essuie-glace de véhicule automobile du type divulgué dans FR-A-2 621 288.

L'invention concerne plus particulièrement un essuie-glace du type comportant un bras porte-balai, un balai d'essuie-glace et un déflecteur aérodynamique qui s'étend longitudinalement sur au moins une partie de la longueur du balai d'essuie-glace auquel il est fixé par sa partie centrale.

Les déflecteurs aérodynamiques sont utilisés en combinaison avec les essuie-glace afin d'augmenter la pression d'appui du balai d'essuie-glace sur la vitre à essuyer notamment pour les hautes vitesses d'avancement du véhicule.

D'une manière connue, un tel dispositif déflecteur est fixé directement ou indirectement par sa partie centrale au balai d'essuie-glace.

Le déflecteur qui se présente la plupart du temps sous la forme d'une lame déflectrice s'étend longitudinalement de part et d'autre de sa partie centrale de fixation selon un profil correspondant à celui du balai d'essuie-glace de manière à épouser sensiblement le profil du balai.

Afin de ne pas augmenter exagérément le poids total de l'essuie-glace et afin de permettre de conformer le déflecteur selon un profil à trois dimensions qui soit le plus adapté à celui du balai d'essuie-glace et aux caractéristiques aérodynamiques que l'on souhaite lui conférer, un tel dispositif de déflecteur est généralement réalisé sous la forme d'une lame déflectrice en matière plastique moulée ou en métal cambré.

Il résulte de cette technique de réalisation que le déflecteur est susceptible de se déformer au voisinage de ses portions d'extrémité situées de part et d'autre de sa partie centrale de fixation. On constate de plus que ces portions d'extrémité vibrent en cours d'utilisation.

L'ensemble de ces inconvénients nuit à un bon rendement aérodynamique de l'essuie-glace, les vibrations pouvant également provoquer une gêne pour le conducteur et des bruits parasites dans le véhicule.

Pour remédier à ces inconvénients, le déflecteur est relié au bras porte-balai ou au balai d'essuie-glace en au moins un autre point éloigné de sa partie centrale de fixation comme par exemple, dans les documents FR-A-2 621 288 et DE-A-3 637 348.

La présente invention propose un essuie-glace pour véhicule automobile du type comportant un bras porte-balai, un balai d'essuie-glace et un déflecteur aérodynamique qui s'étend longitudinalement sur au moins une partie de la longueur du balai d'essuie-glace auquel il est fixé par sa partie centrale, le déflecteur étant relié au balai d'essuie-glace ou au bras porte-balai en au moins deux points agencés respectivement dans chacune de ses portions d'extrémité de part et d'autre de la partie centrale de fixation, du type dans lequel le balai d'essuie-glace comporte une structure de répartition de pression comportant un étrier ou palonnier principal et des étriers ou palonniers intermédiaires articulés à l'étrier principal autour d'axes d'articulations perpendiculaires à la direction générale du balai (Essuie-glace du type divulgué par FR-A-2 621 288), caractérisé en ce que le déflecteur est relié à une extrémité des axes d'articulation de l'étrier principal sur les étriers intermédiaires, ces axes faisant saillie transversalement en direction du déflecteur.

L'invention propose également un essuie-glace du type divulgué dans FR-A-2 621 288, tel que défini dans la revendication 5 et caractérisé en ce que le déflecteur comporte une patte inférieure d'accrochage dont l'extrémité comporte une encoche qui coopère avec le bord inférieur de la joue latérale en vis-à-vis de l'étrier.

L'invention propose enfin un essuie-glace du type divulgué dans FR-A-2 621 288, tel que défini dans la revendication 6.

Différents modes de réalisation de l'invention sont spécifiés dans les revendications dépendantes 2 à 4 et 7.

D'autres caractéristiques et avantages de l'invention apparaîtront à la lecture de la description détaillée qui va suivre pour la compréhension de laquelle on se reportera au dessin annexé dans lequel :
La figure 1 est une vue simplifiée de dessus d'un balai d'essuie-glace équipé d'un déflecteur aérodynamique qui lui est fixé conformément aux enseignements de l'invention ;
- la figure 2 est une vue en section selon la ligne 2-2 de la figure 1 qui illustre un premier mode de réalisation de la liaison de la partie d'extrémité du déflecteur au balai d'essuie-glace ;
- la figure 3 est une vue similaire à celle de la figure 2 d'un second mode de réalisation de la liaison du déflecteur au balai d'essuie-glace ;
- la figure 4 est une vue partielle du déflecteur selon la flèche F de la figure 3 ;
- les figures 5 et 6 sont des vues similaires à celle de la figure 2 qui illustrent d'autres modes de réalisation de l'invention.

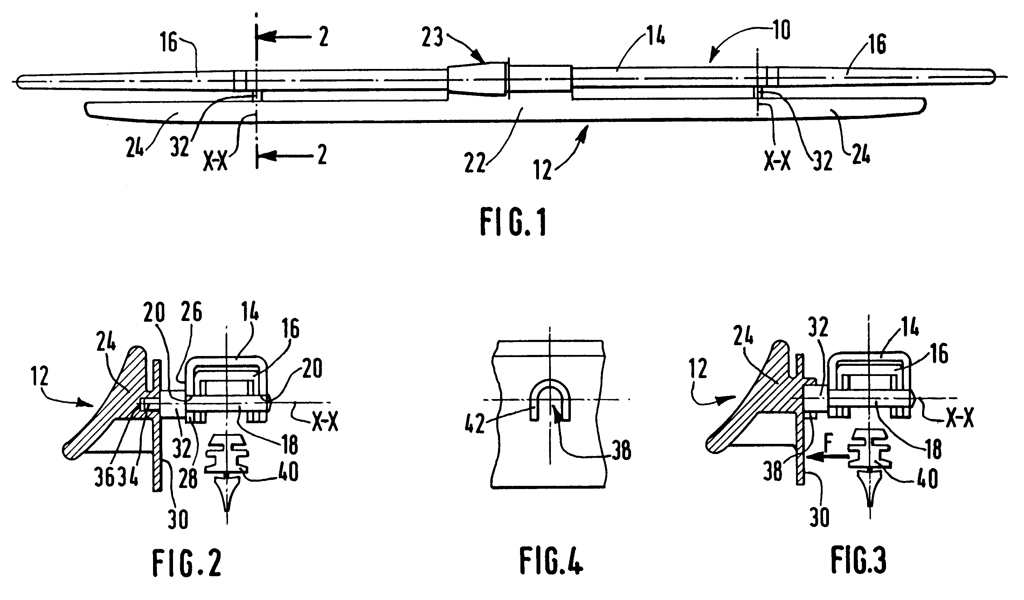

On a illustré à la figure 1 un balai d'essuie-glace 10 équipé d'un déflecteur aérodynamique 12.

Le balai d'essuie-glace 10 est, dans l'exemple de réalisation illustré à la figure 1, constitué par un étrier ou palonnier central 14 sur lequel sont articulés, selon une technique connue, deux étriers ou palonniers d'extrémité 16.

Comme on peut le constater à la figure 2, le palonnier d'extrémité, également appelé palonnier intermédiaire 16, est monté articulé sur le palonnier central 14 autour d'un axe géométrique X-X qui s'étend selon une direction sensiblement perpendiculaire à la direction générale longitudinale du balai 10.

L'articulation entre les deux palonniers est réalisée au moyen d'un axe cylindrique 18 qui traverse des trous correspondants 20 formés dans les joues latérales des palonniers 14 et 16 qui présentent, en section transversale, la forme d'un U inversé.

Le déflecteur 12 est fixé par sa partie centrale 22 au balai d'essuie-glace 10, et notamment au palonnier principal 14 par un dispositif de fixation rigide qui est illustré schématiquement à la figure 1 et qui est désigné par la référence 23.

Un dispositif de fixation du déflecteur 12 sur le balai 10 de conception simple et économique est par exemple décrit et représenté dans le document FR-A-2.630.069 qui décrit et représente un déflecteur qui comporte dans sa partie centrale d'une part des moyens de liaison démontables du balai d'essuie-glace et, d'autre part, des moyens d'articulation du bras porte-balai. Ces moyens de liaison assurent une liaison du déflecteur au balai dans une position fixe.

Conformément à l'invention, il est prévu des moyens de liaison complémentaires du déflecteur 12 au balai d'essuie-glace 10 qui sont agencés dans ses portions d'extrémité 24 qui s'étendent longitudinalement de part et d'autre de sa partie centrale de fixation rigide 22.

Un premier mode de réalisation de la liaison de la portion d'extrémité 24 au balai 10 est illustré à la figure 2.

Comme on peut le constater sur cette figure, l'axe 18 d'articulation des palonniers 14 et 16 se prolonge transversalement vers la gauche au-delà de la face verticale extérieure 26 de la joue latérale 28 du palonnier principal 14 qui est tournée vers la face latérale en vis-à-vis 30 du déflecteur 12.

L'axe d'articulation 18 se prolonge par un épaulement de plus grand diamètre 32 et se termine par une portion d'extrémité libre en saillie 34.

L'extrémité libre 34 est cylindrique et elle est reçue dans un trou cylindrique complémentaire 36 formé dans la face latérale 30 de la portion d'extrémité 24 du déflecteur 12.

Le déflecteur 12 est par exemple une pièce en matière plastique moulée et le trou de liaison 36 est réalisé directement dans la face latérale 30 lors de l'opération de moulage.

On a ainsi réalisé un point de liaison et de fixation supplémentaire du déflecteur 12 sur le balai d'essuie-glace 10 de manière simple et économique.

En effet, par rapport au balai d'essuie-glace existant, il suffit de modifier l'axe d'articulation 18 pour le réaliser sous la forme de l'axe d'articulation épaulé tel qu'il est illustré à la figure 2.

La longueur axiale de la portion de plus grand diamètre 32 de l'axe d'articulation 18 délimite, par ses faces radiales opposées, la distance fonctionnelle qui existe entre les faces latérales 26 et 30 du balai d'essuie-glace 10 et du déflecteur 12.

Grâce à la réalisation du point de liaison supplémentaire de la portion d'extrémité 24 du déflecteur 12, on supprime ainsi de manière économique les risques de déformation du déflecteur lors de son utilisation ainsi que les phénomènes de vibration de cette portion d'extrémité.

Une liaison identique peut être prévue pour l'autre portion d'extrémité 24 du déflecteur 12 comme cela est schématisé à la partie droite de la figure 1.

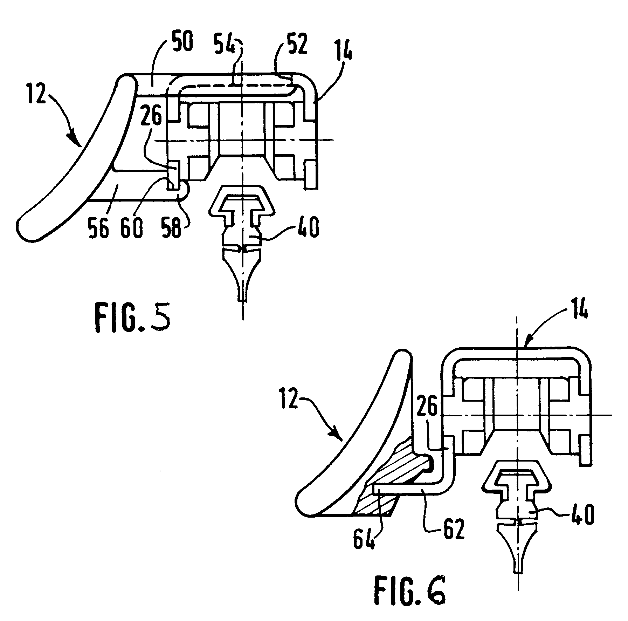

On décrira le second mode de réalisation des moyens de liaison illustré aux figures 3 et 4 sur lesquelles les éléments identiques ou équivalents à ceux de la figure 2 sont désignés par les mêmes chiffres de référence.

La portion d'extrémité en saillie de plus grand diamètre 32 de l'axe d'articulation 18 est ici reçue dans une encoche 38 formée dans la face latérale 30 de la portion d'extrémité 24 du déflecteur 12.

Comme on peut le constater à la figure 4, l'encoche 38 présente en section la forme d'un U renversé qui est ouvert en direction de la vitre à essuyer, c'est-à-dire selon la direction générale du plan dans lequel s'étend la lame d'essuyage 40.

L'encoche 38 est délimitée par un prolongement transversal 42 venu de moulage avec le déflecteur 12.

La conception du second mode de réalisation des moyens de liaison permet de faciliter le montage du déflecteur sur le balai d'essuie-glace et permet également d'absorber des déformations plus importantes de la structure de répartition de pression constituée par les palonniers 14 et 16, la portion d'extrémité 32 pouvant alors se déplacer verticalement vers le bas, en considérant les figures 3 et 4, à l'intérieur de son encoche de liaison 38.

Dans le mode de réalisation illustré à la figure 5, les moyens d'accrochage complémentaire du déflecteur 12 sur l'étrier principal 14 sont constitués par une patte supérieure d'accrochage 50 qui est emboîtée dans une encoche 52 formée dans la face supérieure 54 de l'étrier principal 14.

Les moyens d'accrochage comportent en outre une deuxième patte d'accrochage inférieure 56 dont l'extrémité 58 comporte une encoche 60 qui reçoit le bord inférieur libre de la joue latérale 26 de l'étrier principal 14.

Enfin, dans le mode de réalisation illustré à la figure 6, la joue latérale 26 de l'étrier principal 14 comporte une patte d'accrochage ou de fixation 62 qui s'étend transversalement selon une direction sensiblement perpendiculaire au plan de la joue latérale 26, en direction du déflecteur 12 et dont l'extrémité libre 64 est reçue dans un trou complémentaire formé dans le déflecteur 12.

L'invention qui vient d'être décrite n'est pas limitée au mode de fixation de la partie centrale 22 du déflecteur 12 sur le balai 10 tel qu'il est décrit et représenté dans le document FR-A-2.630.069 auquel il a précédemment été fait référence.

L'invention trouve en effet à s'appliquer quel que soit le mode de fixation rigide de la partie centrale 22 du déflecteur 12.

De même l'invention n'est pas limitée à l'agencement symétrique de deux points de liaison supplémentaires du déflecteur sur le balai.

## Revendications

1. Essuie-glace pour véhicule automobile du type comportant un bras porte-balai, un balai d'essuie-glace (10) et un déflecteur aérodynamique (12) qui s'étend longitudinalement sur au moins une partie de la longueur du balai d'essuie-glace (10) auquel il est fixé par sa partie centrale (22), le déflecteur (12) étant relié au balai d'essuie-glace (10) ou au bras porte-balai en au moins deux points agencés respectivement dans chacune de ses portions d'extrémité (24) de part et d'autre de la partie centrale de fixation (22), du type dans lequel le balai d'essuie-glace (10) comporte une structure de répartition de pression comportant un étrier ou palonnier principal (14) et des étriers ou palonniers intermédiaires (16) articules à l'étrier principal (14) autour d'axes articulations (18) perpendiculaires à la direction générale du balai, caractérisé en ce que le déflecteur (12, 24) est relié à une extrémité (32, 34) des axes d'articulation (18) de l'étrier principal (14) sur les étriers intermédiaires (16), ces axes (18) faisant saillie transversalement en direction du déflecteur (12,24).

2. Essuie-glace selon la revendication 1, caractérisé en ce que l'extrémité libre en saillie (34) des axes d'articulation (18) est reçue dans un trou correspondant (36) formé dans le déflecteur (24, 30).

3. Essuie-glace selon la revendication 2, caractérisé en ce que l'extrémité libre en saillie (32) de l'axe d'articulation (18) est reçue dans une encoche (38) formée dans le déflecteur (24, 30).

4. Essuie-glace selon la revendication 3, caractérisé en ce que l'encoche (38) présente en section la forme d'un U ouvert en direction de la vitre à essuyer.

5. Essuie-glace pour véhicule automobile du type comportant un bras porte-balai, un balai d'essuie-glace (10) et un déflecteur aérodynamique (12) qui s'étend longitudinalement sur au moins une partie de la longueur du balai d'essuie-glace (10) auquel il est fixé par sa partie centrale (22), le déflecteur (12) étant relié au balai d'essuie-glace (10) ou au bras porte-balai en au moins deux points agencés respectivement dans chacune de ses portions d'extrémité (24) de part et d'autre de la partie centrale de fixation (22), du type dans lequel le balai d'essuie-glace (10) comporte une structure de répartition de pression comportant un étrier ou palonnier principal (14) et des étriers ou palonniers intermédiaires (16), le déflecteur (12) comportant au moins une partie d'accrochage (50 ,56) qui fait saillie transversalement en direction de l'essuie-glace et qui est reçue dans un trou correspondant du bras (8) ou d'au moins un étrier (14,16) le déflecteur (12) comportant une patte supérieure d'accrochage (50) dont l'extrémité est reçue dans une encoche complémentaire (52) formée dans une face supérieure (54) de l'étrier (14) principal, caractérisé en ce qu le déflecteur (12) comporte une patte inférieure d'accrochage (56) dont l'extrémité (58) comporte une encoche (60) qui coopère avec le bord inférieur du la joue latérale en vis-à-vis (26) de l'étrier principal (14).

6. Essuie-glace pour véhicule automobile du type comportant un bras porte-balai, un balai d'essuie-glace (10) et un déflecteur aérodynamique (12) qui s'étend longitudinalement sur au moins une partie de la longueur du balai d'essuie-glace (10) auquel il est fixé par sa partie centrale (22), le déflecteur (12) étant relié au balai d'essuie-glace (10) ou au bras porte-balai en au moins deux points agencés respectivement dans chacune de ses portions d'extrémité (24) de part et d'autre de la partie centrale de fixation (22),du type dans lequel le balai d'essuie-glace comporte une structure de répartition de pression comportant au moins un étrier, caractérisé en ce que l'étrier principal (14) comporte une patte (62) qui fait saillie transversalement depuis une des joues latérales (26) de l'étrier principal (14) et dont l'extrémité libre (64) est reçue dans un trou correspondant du déflecteur (12).

7. Essuie-glace selon l'une quelconque des revendications précédentes, caractérisé en ce que le déflecteur (12) comporte dans sa partie centrale (22) d'une part des moyens de liaison démontables du balai d'essuie-glace (10) et d'autre part des moyens d'articulation du bras porte-balai, lesdits moyens de liaison assurant une liaison du déflecteur (12) au balai dans une position fixe.

## Claims

1. A screen wiper for a motor vehicle of the type comprising a blade carrier, a screen wiper blade (10) and an aerodynamic deflector (12) which extends longitudinally over at least part of the length of the screen wiper blade (10), to which it is fastened through its central portion (22), the deflector (12) being joined to the screen wiper blade (10) or to the blade-carrying arm in at least two points located respectively in each of its end portions (24), on either side of the central fastening portion (22), and being of the type in which the screen wiper arm (10) includes a pressure distributing structure comprising a main stirrup or yoke (14) and intermediate stirrups or yokes (16), which are articulated to the main stirrup (14) about articulation axes (18) at right angles to the general direction of the blade, characterised in that the deflector (12, 24) is connected to one end (32, 34) of the axes (18) of articulation of the main stirrup (14) on the intermediate stirrups (16), these axes (18) projecting transversely towards the deflector (12, 24).

2. A screen wiper according to Claim 1, characterised in that the projecting free end (34) of the articulation axes (18) is received in a corresponding hole (36) formed in the deflector (24, 30).

3. A screen wiper according to Claim 2, characterised in that the projecting free end (32) of the articulation axis is received in a slot (38) formed in the deflector (24, 30).

4. A screen wiper according to Claim 3, characterised in that the slot (38) has, in cross section, a U-shaped profile open towards the swept surface.

5. A screen wiper for a motor vehicle of the type comprising a blade carrier, a screen wiper blade (10) and an aerodynamic deflector (12) which extends longitudinally over at least part of the length of the screen wiper blade (10), to which it is fastened through its central portion (22), the deflector (12) being joined to the screen wiper blade (10) or to the blade-carrying arm in at least two points located respectively in each of its end portions (24), on either side of the central fastening portion (22), and being of the type in which the screen wiper arm (10) includes a pressure distributing structure comprising a main stirrup or yoke (14) and intermediate stirrups or yokes (16), the deflector (12) having at least one hooking portion (50, 56) which projects transversely towards the screen wiper and which is received in a corresponding hole in the arm (8) or in at least one stirrup (14, 16), the deflector (12) comprising an upper hooking lug (50), the end of which is received in a complementary slot (52) formed in an upper surface (54) of the main stirrup (14), characterised in that the deflector (12) includes a lower hooking lug (56), the end (58) of which has a notch (60) which cooperates, in facing relationship, with the lower edge of the lateral portion (26) of the main stirrup (14).

6. A screen wiper for a motor vehicle of the type comprising a blade carrier, a screen wiper blade (10) and an aerodynamic deflector (12) which extends longitudinally over at least part of the length of the screen wiper blade (10), to which it is fastened through its central portion (22), the deflector (12) being joined to the screen wiper blade (10) or to the blade-carrying arm in at least two points located respectively in each of its end portions (24), on either side of the central fastening portion (22), and being of the type in which the screen wiper arm includes a pressure distributing structure comprising at least one stirrup, characterised in that the main stirrup (14) has a lug (62) which projects transversely from one of the lateral portions (26) of the main stirrup (14), and the free end (64) of which is received in a corresponding hole in the deflector (12).

7. A screen wiper according to any one of the preceding Claims, characterised in that the deflector (12) includes in its central portion (22), firstly, disconnectable coupling means for the screen wiper blade (10), and secondly, articulating means for the blade-carrying arm, with the said coupling means providing coupling of the deflector (12) to the blade in a fixed position.

## Patentansprüche

1. Scheibenwischer für ein Kraftfahrzeug in der Ausführung mit einem Scheibenwischerarm, einem Scheibenwischerblatt (10) und einem aerodynamischen Windabweiser (12), der sich in Längsrichtung zumindest auf einem Teil der Länge des Scheibenwischerblatts (10) erstreckt, an dem er mit seinem Mittelteil (22) befestigt ist, wobei der Windabweiser (12) mit dem Scheibenwischerblatt (10) oder dem Scheibenwischerarm an mindestens zwei Stellen verbunden ist, die in jedem seiner Endabschnitte (24) beiderseits des zur Befestigung dienenden Mittelteils (22) angeordnet sind, in der Bauart, bei welcher das Scheibenwischerblatt (10) eine Druckverteilungsstruktur umfaßt, bestehend aus einem Hauptbügel oder einer Haupttraverse (14) und Zwischenbügeln oder Zwischentraversen (16), die an den Hauptbügel (14) um Gelenkstifte (18) angelenkt sind, welche senkrecht zur Gesamtrichtung des Wischerblatts verlaufen, **dadurch gekennzeichnet**, daß der Windabweiser (12, 14) mit einem Ende (32, 34) der Gelenkstifte (18) des Hauptbügels (14) an den Zwischenbügeln (16) verbunden ist, wobei diese Gelenkstifte (18) quer in Richtung des Windabweisers (12, 24) vorstehen.

2. Scheibenwischer nach Anspruch 1 , **dadurch gekennzeichnet,** daß das vorstehende freie Ende (34) der Gelenkstifte (18) in einer entsprechenden Bohrung (36) aufgenommen wird, die im Windabweiser (24, 30) ausgebildet ist.

3. Scheibenwischer nach Anspruch 2 , **dadurch gekennzeichnet,** daß das vorstehende freie Ende (32) des Gelenkstifts (18) in einer Auskehlung (38) aufgenommen wird, die im Windabweiser (24, 30) ausgebildet ist.

4. Scheibenwischer nach Anspruch 3 , **dadurch gekennzeichnet,** daß die Auskehlung (38) im Querschnitt die Form eines in Richtung der zu wischenden Glasscheibe offenen U aufweist.

5. Scheibenwischer für ein Kraftfahrzeug in der Ausführung mit einem Scheibenwischerarm, einem Scheibenwischerblatt (10) und einem aerodynamischen Windabweiser (12), der sich in Längsrichtung zumindest auf einem Teil der Länge des Scheibenwischerblatts (10) erstreckt, an dem er mit seinem Mittelteil (22) befestigt ist, wobei der Windabweiser (12) mit dem Scheibenwischerblatt (10) oder dem Scheibenwischerarm an mindestens zwei Stellen verbunden ist, die in jedem seiner Endabschnitte (24) beiderseits des zur Befestigung dienenden Mittelteils (22) angeordnet sind, in der Bauart, bei welcher das Scheibenwischerblatt (10) eine Druckverteilungsstruktur umfaßt, bestehend aus einem Hauptbügel oder einer Haupttraverse (14) und Zwischenbügeln oder Zwischentraversen (16), wobei der Windabweiser (12) mindestens einen Einsetzteil (50, 56) umfaßt, der quer in Richtung des Scheibenwischers vorsteht und der in einer entsprechenden Öffnung des Scheibenwischerarms oder mindestens eines Bügels (14, 16) aufgenommen wird, wobei der Windabweiser (12) ein oberes Einsetzstück (50) umfaßt, dessen Ende in einer dazu passenden Auskehlung (52) aufgenommen wird, die in einer Oberseite (54) des Hauptbügels (14) ausgebildet ist , **dadurch gekennzeichnet**, daß der windabweiser (12) ein unteres Einsetzstück (56) umfaßt, dessen Ende (58) eine Auskehlung (60) enthält, die mit der Unterkante der gegenüberliegenden Seitenwange (26) des Hauptbügels (14) zusammenwirkt.

6. Scheibenwischer für ein Kraftfahrzeug in der Ausführung mit einem Scheibenwischerarm, einem Scheibenwischerblatt (10) und einem aerodynamischen Windabweiser (12), der sich in Längsrichtung zumindest auf einem Teil der Länge des Scheibenwischerblatts (10) erstreckt, an dem er mit seinem Mittelteil (22) befestigt ist, wobei der Windabweiser (12) mit dem Scheibenwischerblatt (10) oder dem Scheibenwischerarm an mindestens zwei Stellen verbunden ist, die in jedem seiner Endabschnitte (24) beiderseits des zur Befestigung dienenden Mittelteils (22) angeordnet sind, in der Bauart, bei welcher das Scheibenwischerblatt (10) eine Druckverteilungsstruktur umfaßt, bestehend aus mindestens einem Bügel , **dadurch gekennzeichnet,** daß der Hauptbügel (14) ein Stück (62) umfaßt, das von einer der Seitenwangen (26) des Hauptbügels (14) aus quer vorsteht und dessen freies Ende (64) in einer entsprechenden Bohrung des Windabweisers (12) aufgenommen wird.

7. Scheibenwischer nach einem der vorangehenden Ansprüche, **dadurch gekennzeichnet**, daß der Windabweiser (12) in seinem Mittelteil (22) einerseits abnehmbare Verbindungsmittel für das Scheibenwischerblatt (10) und andererseits Anlenkmittel für den Scheibenwischerarm umfaßt, wobei die besagten Verbindungsmittel eine Verbndung des Windabweisers (12) am Wischerblatt in einer festen Position gewährleisten.
